# EUROPÄISCHE PATENTANMELDUNG

(11) **EP 1 195 886 A1**
(43) Veröffentlichungstag der Anmeldung: **10.04.2002**
(21) Anmeldenummer: 00810898.7
(22) Anmeldetag: 29.09.2000
(51) Int. Cl.: H02M 7/515

(54) **Rückwärtsleitender Gate Commutated Thyristor sowie dessen Anwendung**

(71) Anmelder: ABB Schweiz AG, 5400 Baden (CH)
(72) Erfinder: Weber, Andrè Dr., 4600 Olten (CH)
(74) Vertreter: ABB Patent Attorneys

(57) **Zusammenfassung**

Ein Stromquellenumrichter (1) umfasst eine Brückenschaltung (2) mit einer Mehrzahl von Brückenzweigen (5), in denen jeweils ein steuerbares Leistungshalbleiterbauelement (6) angeordnet ist.

Bei einem solchen Umrichter wird ein Verlust in der Leistungsfähigkeit aufgrund von Induktivitäts-bedingten Ueberspannungen beim Ausschalten der Leistungshalbleiterbauelemente (6) dadurch vermieden, dass das steuerbare Leistungshalbleiterbauelement (6) zumindest bei Belastung in Vorwärtsrichtung Avalanchefest ist.

## Beschreibung

### TECHNISCHES GEBIET

Die vorliegende Erfindung bezieht sich auf das Gebiet der Leistungselektronik. Sie betrifft einen rückwärtsleitenden GCT (Gate Commutated Thyristor) gemäss dem Oberbegriff des Anspruchs 1 sowie eine Anwendung eines solchen GCT.

### STAND DER TECHNIK

Für Anwendungen in Stromquellenumrichtern ("current source invertern"), wie sie beispielsweise aus der US-A-4,545,002 bekannt sind, werden rückwärts blockierende Leistungshalbleiterbauelemente wie z.B. Thyristoren, GTOs oder IGCTs (Integrated Gate Commutated Thyristors) eingesetzt (bzgl. einer Erklärung der Funktion und des Aufbaus von IGCTs wird z.B. auf einen Artikel von Harold M.

Stillman, "IGCTs - megawatt power switches for medium-voltage applications", ABB Review 3 (1997) verwiesen). Dabei können sowohl symmetrische Bauelemente als auch eine Serieschaltung aus einem asymmetrischen Bauelement und einer Diode eingesetzt werden. Das Problem bei der Anwendung besteht darin. dass beim Ausschalten in eine positive Spannung (bei GTOs und IGCTs) eine grosse Ueberspannung durch die Kommutierungsinduktivität induziert wird. Die Kommutierungsinduktivität ist jedoch nur beschränkt beeinflussbar, da sie durch Streuinduktivitäten gegeben ist.

In der Anwendung muss daher die Ueberspannung entweder durch das eingesetzte Halbleiterbauelement beherrscht werden, oder durch eine massive externe Beschaltung reduziert werden. Beide Ansätze führen zu Verlusten, welche die Leistungsfähigkeit des Stromrichters beschränken.

### DARSTELLUNG DER ERFINDUNG

Es ist daher Aufgabe der Erfindung, einen Stromquellenumrichter zu schaffen, welcher die genannten Nachteile bekannter Stromquellenumrichter nicht aufweist und insbesondere nicht durch die beim Abschalten entstehenden Ueberspannungen in seiner Leistungsfähigkeit beeinträchtigt ist, sowie ein Leistungshalbleiterbauelement zum Einsatz in einem solchen Stromquellenumrichter anzugeben

Die Aufgabe wird durch die Gesamtheit der Merkmale der Ansprüche 1 und 3 gelöst. Der Kern der Erfindung besteht darin, in den Brückenzweigen des Umrichters ein Leistungshalbleiterbauelement einzusetzen, welches zumindest bei Belastung in Vorwärtsrichtung Avalanche-fest ist. Hierdurch entfällt insbesondere die Notwendigkeit, im Umrichter zusätzliche Schaltungsmassnahmen vorzusehen. Vorzugsweise wird eine Serieschaltung aus einem rückwärtsleitenden GCT (Gate Commutated Thyristor) und einer Diode eingesetzt.

Bei dem rückwärtsleitender GCT, bei dem in einem Halbleitersubstrat nebeneinander ein GCT-Teil und ein antiparalleler Diodenteil integriert sind, wird die Avalanche-Festigkeit dadurch erreicht, dass der Diodenteil derart ausgebildet ist, dass seine Avalanche-Spannung kleiner ist als die Blockierspannung des GCT-Teils.

Gemäss einer ersten bevorzugten Ausgestaltung des GCT nach der Erfindung umfasst der Diodenteil übereinander eine Kathodenemitterschicht, eine erste Basisschicht, und eine erste Anodenemitterschicht, und die Avalanchespannung bzw. Blockierspannung des Diodenteils ist durch eine vertieftes Eintreiben der Kathodenemitterschicht in das Halbleitersubstrat bzw. die erste Basisschicht herabgesetzt.

Eine andere bevorzugte Ausgestaltung ist dadurch gekennzeichnet, dass der Diodenteil ebenfalls übereinander eine Kathodenemitterschicht, eine erste Basisschicht, und eine erste Anodenemitterschicht umfasst, und dass die Avalanchespannung bzw. Blockierspannung des Diodenteils durch eine vertieftes Eintreiben der ersten Anodenemitterschicht in das Halbleitersubstrat bzw. die erste Basisschicht herabgesetzt ist.

Eine weitere Ausgestaltung des erfindungsgemässen GCT zeichnet sich dadurch aus, dass der Diodenteil wiederum übereinander eine Kathodenemitterschicht, eine erste Basisschicht, und eine erste Anodenemitterschicht umfasst, und dass die Avalanchespannung bzw. Blockierspannung des Diodenteils durch eine Verringerung des spezifischen Widerstandes der ersten Basisschicht herabgesetzt ist, wobei die Verringerung des spezifischen Widerstandes der ersten Basisschicht vorzugsweise durch eine Neutronenbestrahlung bewirkt ist.

Schliesslich ist es auch möglich, die Avalanchespannung bzw. Blockierspannung des Diodenteils durch eine Reduzierung der Dicke des Halbleitersubstrats im Bereich des Diodenteils zu bewirken.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: das Schaltschema eines Stromquellenumrichters mit einer Serieschaltung aus einem GCT und einer Diode in den Brückenzweigen;
- Fig. 2: den Schnitt durch einen rückwärtsleitenden GCT nach dem Stand der Technik;
- Fig. 3: ein erstes Ausführungsbeispiel eines rückwärtsleitenden GCT nach der Erfindung mit vertiefter Kathodenemitterschicht im Diodenteil;
- Fig. 4: ein zweites Ausführungsbeispiel eines rückwärtsleitenden GCT nach der Erfindung mit vertiefter Anodenemitterschicht im Diodenteil;
- Fig. 5: ein drittes Ausführungsbeispiel eines rückwärtsleitenden GCT nach der Erfindung mit reduziertem spezifischem Widerstand in der Basisschicht des Diodenteils; und
- Fig. 6: ein viertes Ausführungsbeispiel eines rückwärtsleitenden GCT nach der Erfindung mit reduzierter Dicke des Halbleitersubstrats im Diodenteil.

### WEGE ZUR AUSFÜHRUNG DER ERFINDUNG

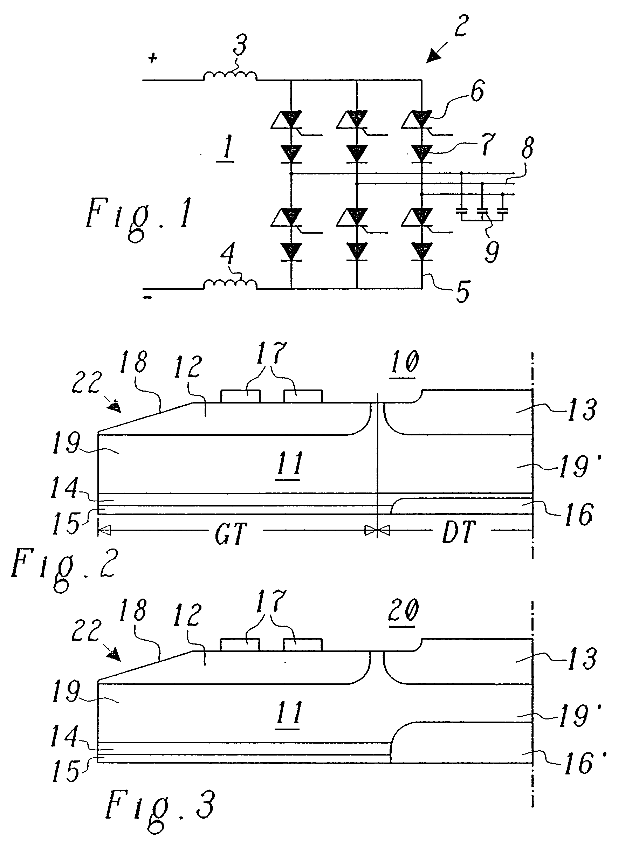

In Fig. 1 ist ein vereinfachtes Schaltschema eines Stromquellenumrichters 1 wiedergegeben. Der Stromquellenumrichter 1 umfasst eine Brückenschaltung 2 (Drehstrombrückenschaltung) mit einzelnen Brückenzweigen 5, in denen steuerbare Leistungshalbleiterbauelemente angeordnet sind, die in geeigneter Weise durch eine nicht dargestellte Steuerung so angesteuert werden, dass am Wechselstromausgang 8 des Umrichters eine Wechselspannung der gewünschten Frequenz ansteht. Die Brückenschaltung 2 erhält eingangsseitig aus einem Zwischenkreis mit entsprechenden Zwischenkreisinduktivitäten 3, 4 einen Gleichstrom. Am Wechselstromausgang sind mehrere Kondensatoren 9 in der dargestellten Weise angeordnet.

Gemäss der Erfindung sind nun als steuerbare Leistungshalbleiterbauelemente in den Brückenzweigen 5 rückwärtsleitende GCTs 6 vorgesehen, die jeweils mit einer Diode 7 in Serie geschaltet sind und so ausgebildet sind, dass sie bei Belastung in Vorwärtsrichtung Avalanche-fest sind. Als GCT wird dabei generell das durch seine interne Struktur festgelegte Bauelement bezeichnet, während der eingangs beschriebene IGCT ein GCT mit auf spezielle Weise integrierter Gate-Ansteuerung ist.

Die interne Struktur eines herkömmlichen rückwärtsleitenden GCTs ist im Schnitt in Fig. 2 dargestellt, wobei - wie auch in den weiteren Figuren 3 bis 6 - auf eine Schraffur der unterschiedlichen Bereiche und Schichten weitgehend verzichtet worden ist. Der bekannte GCT 10 umfasst einen GCT-Teil GT und einen Diodenteil DT, die nebeneinander in einem Halbleitersubstrat 11 integriert sind. Der GCT-Teil GT umgibt den im Zentrum angeordneten Diodenteil DT konzentrisch und weist an seinem äusseren Rand einen durch eine Randabschrägung 18 gekennzeichneten, umlaufenden Randabschluss 22 auf. Es ist auch möglich, dass der Diodenteil DT den GCT-Teil umgibt. Der Diodenteil DT stellt eine antiparallel Diode dar, die beim Betrieb des GCTs in Vorwärtsrichtung in Sperrrichtung gepolt ist. Der Diodenteil DT bzw. die Diode hat in Sperrrichtung eine bestimmte Avalanchespannung bzw. Blockierspannung, bei deren Ueberschreiten der Lawinendurchbruch einsetzt. Der GCT-Teil GT bzw. der GCT hat ebenfalls eine Blockierspannung, die der Blockierspannung des Randabschlusses 22 entspricht.

Der GCT-Teil GT und der Diodenteil DT haben jeweils eine bestimmte Abfolge von Schichten bzw. Bereichen unterschiedlicher Leitfähigkeit und Ladungsträgerkonzentration, die beispielsweise durch maskierte Eindiffusion von Fremdstoffen in das Halbleitersubstrat 11 erzeugt worden sind. Im Diodenteil DT sind (von der Kathode zur Anode) übereinander eine n⁺-dotierte Kathodenemitterschicht 16, eine n⁻-dotierte erste Basisschicht 19' und eine p-dotierte erste Anodenemitterschicht 13 angeordnet. Im GCT-Teil GT sind (von der Anode zur Kathode) übereinander eine p⁺-dotierte zweite Anodenemitterschicht 15, eine n-dotierte Stoppschicht 14, eine n⁻-dotierte zweite Basisschicht 19, eine p-dotierte dritte Basisschicht 12 und darauf verteilt einzelne n⁺-dotierte Kathodenemitter 17 angeordnet. Die zweite Basisschicht 19 und die erste Basisschicht 19' sind dabei Teil desselben n⁻-dotierten Basismaterials des Halbleitersubstrats 11. Die dritte Basisschicht 12 des GCT-Teils GT und die Anodenemitterschicht 13 des Diodenteils DT sind in etwa gleich tief in das Halbleitersubstrat 11 eindiffundiert. Die Stoppschicht 14 des GCT-Teils GT zieht sich auch durch den Diodenteil DT und überdeckt die dortige Kathodenemitterschicht 16.

Von dieser bekannten Struktur des rückwärtsleitenden GCT ausgehend wird nun gemäss der Erfindung die Avalanchespannung der integrierten Diode (im Diodenteil DT) durch geeignete Massnahmen soweit herabgesetzt, dass sie unterhalb der Blockierspannung des Randabschlusses 22 des GCT liegt. Dies kann im einzelnen auf unterschiedliche Weise geschehen, wie dies nachfolgend anhand der Figuren 3 bis 6 erläutert werden soll:

Beim rückwärtsleitenden GCT 20 gemäss Fig. 3 wird die Herabsetzung der Avalanchespannung bzw. Blockierspannung der Diode dadurch erreicht, dass im

Diodenteil die Kathodenemitterschicht 16' tiefer, insbesondere deutlich über die Stoppsicht 14 hinaus, in das Halbleitersubstrat 11 bzw. die erste Basisschicht 19' eingetrieben wird.

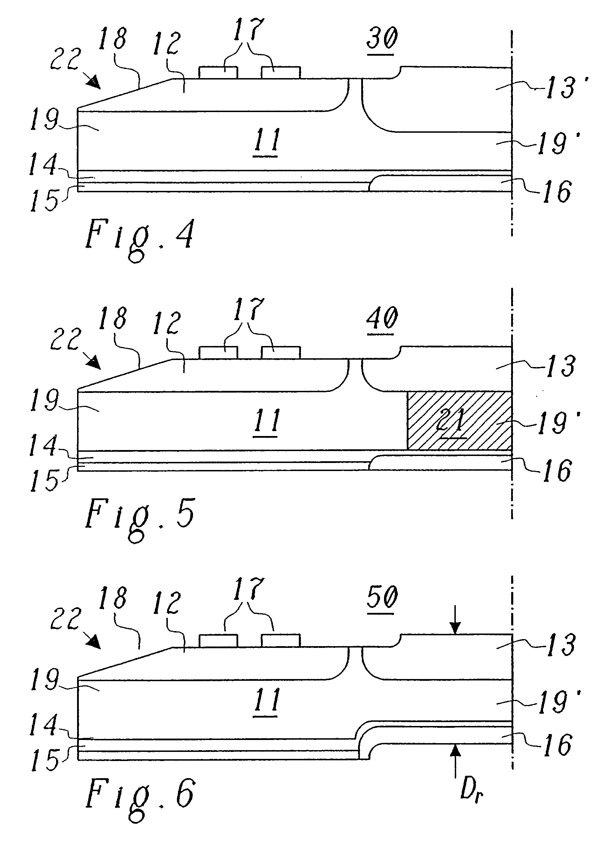

Beim rückwärtsleitenden GCT 30 gemäss Fig. 4 wird die Herabsetzung der Avalanchespannung bzw. Blockierspannung der Diode dadurch erreicht, dass die erste Anodenemitterschicht 13' im Diodenteil tiefer als die dritte Basisschicht 12 des GCT in das Halbleitersubstrat 11 bzw. die erste Basisschicht 19' eingetrieben wird.

Beim rückwärtsleitenden GCT 40 gemäss Fig. 5 wird die Herabsetzung der Avalanchespannung bzw. Blockierspannung der Diode dadurch erreicht, dass in der ersten Basisschicht 19' im Diodenteil der spezifischen Widerstand herabgesetzt wird. Dies wird vorzugsweise dadurch erreicht, dass durch nachträgliche Neutronenbestrahlung in dieser Schicht ein Strahlungsgebiet 21 erzeugt wird.

Beim rückwärtsleitenden GCT 50 gemäss Fig. 6 schliesslich wird die Herabsetzung der Avalanchespannung bzw. Blockierspannung der Diode dadurch erreicht, dass im Diodenteil die Dicke des Halbleitersubstrats 11 gegenüber dem GCT-Teil auf eine reduzierte Dicke Dᵣ verringert wird.

### BEZUGSZEICHENLISTE

- 1: Stromquellenumrichter
- 2: Brückenschaltung
- 3,4: Zwischenkreisinduktivität
- 5: Brückenzweig
- 6: GCT
- 7: Diode
- 8: Wechselstromausgang
- 9: Kondensator
- 10,20,30,40,50: GCT (rückwärtsleitend)
- 11: Halbleitersubstrat
- 12: Basisschicht (p-dotiert)
- 13,13': Anodenemitterschicht (Diode; p-dotiert)
- 14: Stoppschicht (n-dotiert)
- 15: Anodenemitterschicht (GCT; p⁺-dotiert)
- 16,16': Kathodenemitterschicht (Diode; n⁺-dotiert)
- 17: Kathodenemitter (GCT; n⁺-dotiert)
- 18: Randabschrägung
- 19,19': Basisschicht (n⁻-dotiert)
- 21: Bestrahlungsgebiet
- 22: Randabschluss
- GT: GCT-Teil
- DE: Diodenteil

## Patentansprüche

1. Stromquellenumrichter (1), umfassend eine Brückenschaltung (2) mit einer Mehrzahl von Brückenzweigen (5), in denen jeweils ein steuerbares Leistungshalbleiterbauelement (6) angeordnet ist, **dadurch gekennzeichnet, dass** das steuerbare Leistungshalbleiterbauelement (6) zumindest bei Belastung in Vorwärtsrichtung Avalanche-fest ist.

2. Stromquellenumrichter nach Anspruch 1, **dadurch gekennzeichnet, dass** das Leistungshalbleiterbauelement ein rückwärtsleitender GCT (6) ist, welcher mit einer Diode in Serie geschaltet ist.

3. Rückwärtsleitender GCT (20, 30, 40, 50) für den Einsatz in einem Stromquellenumrichter (1) nach einem der Ansprüche 1 und 2, bei welchem GCT in einem Halbleitersubstrat (11) nebeneinander ein GCT-Teil (GT) und ein antiparalleler Diodenteil (DT) integriert sind, **dadurch gekennzeichnet, dass** der Diodenteil (DT) derart ausgebildet ist, dass seine Avalanche-Spannung kleiner ist als die Blockierspannung des GCT-Teils (GT).

4. GCT nach Anspruch 3, **dadurch gekennzeichnet, dass** der GCT-Teil (GT) im Halbleitersubstrat (11) das Diodenelement (DE) konzentrisch umgibt und einen Randabschluss (22) aufweist, und dass die Blockierspannung des GCT-Teiles (GT) der Blockierspannung des Randabschlusses (22) entspricht.

5. GCT nach einem der Ansprüche 3 und 4, **dadurch gekennzeichnet, dass** der Diodenteil (DT) übereinander eine Kathodenemitterschicht (16'), eine erste Basisschicht (19'), und eine erste Anodenemitterschicht (13) umfasst, und dass die Avalanchespannung bzw. Blockierspannung des Diodenteils (DT) durch eine vertieftes Eintreiben der Kathodenemitterschicht (16') in das Halbleitersubstrat (11) bzw. die erste Basisschicht (19') herabgesetzt ist.

6. GCT nach Anspruch 5, **dadurch gekennzeichnet, dass** der GCT-Teil (GT) übereinander eine zweite Anodenemitterschicht (15), eine Stoppschicht (14), eine zweite Basisschicht (19), eine dritte Basisschicht (12) und verteilt angeordnete Kathodenemitter (17) umfasst, wobei die zweite Basisschicht (19) in die erste Basisschicht (19') des Diodenteils (DT) übergeht, und dass die Kathodenemitterschicht (16') des Diodenteils (DT) tiefer in die erste Basisschicht (19') hineinreicht als die Stoppschicht (14) in die zweite Basisschicht (19) des GCT-Teils (GT).

7. GCT nach einem der Ansprüche 3 und 4, **dadurch gekennzeichnet, dass** der Diodenteil (DT) übereinander eine Kathodenemitterschicht (16'), eine erste Basisschicht (19'), und eine erste Anodenemitterschicht (13') umfasst, und dass die Avalanchespannung bzw. Blockierspannung des Diodenteils (DT) durch eine vertieftes Eintreiben der ersten Anodenemitterschicht (13') in das Halbleitersubstrat (11) bzw. die erste Basisschicht (19') herabgesetzt ist.

8. GCT nach Anspruch 7, **dadurch gekennzeichnet, dass** der GCT-Teil (GT) übereinander eine zweite Anodenemitterschicht (15), eine Stoppschicht (14), eine zweite Basisschicht (19), eine dritte Basisschicht (12) und verteilt angeordnete Kathodenemitter (17) umfasst, wobei die zweite Basisschicht (19) in die erste Basisschicht (19') des Diodenteils (DT) übergeht, und dass die erste Anodenemitterschicht (13') des Diodenteils (DT) tiefer in die erste Basisschicht (19') hineinreicht als die dritte Basisschicht (12) in die zweite Basisschicht (19) des GCT-Teils (GT).

9. GCT nach einem der Ansprüche 3 und 4, **dadurch gekennzeichnet, dass** der Diodenteil (DT) übereinander eine Kathodenemitterschicht (16'), eine erste Basisschicht (19'), und eine erste Anodenemitterschicht (13') umfasst, und dass die Avalanchespannung bzw. Blockierspannung des Diodenteils (DT) durch eine Verringerung des spezifischen Widerstandes der ersten Basisschicht (19') herabgesetzt ist.

10. GCT nach Anspruch 9, **dadurch gekennzeichnet, dass** die Verringerung des spezifischen Widerstandes der ersten Basisschicht (19') durch eine Neutronenbestrahlung bewirkt ist.

11. GCT nach einem der Ansprüche 3 und 4, **dadurch gekennzeichnet, dass** die Avalanchespannung bzw. Blockierspannung des Diodenteils (DT) durch eine Reduzierung der Dicke des Halbleitersubstrats (11) im Bereich des Diodenteils (DT) bewirkt wird.
